(19) Europäisches Patentamt
European Patent Office
Office européen des brevets

(11) Veröffentlichungsnummer : **0 065 211**
**B1**

(12) # EUROPÄISCHE PATENTSCHRIFT

(45) Veröffentlichungstag der Patentschrift : **20.02.85**

(51) Int. Cl.$^4$ : **C 09 B 62/085**, C 09 B 62/51, D 06 P 3/10, D 06 P 3/60

(21) Anmeldenummer : **82103860.1**

(22) Anmeldetag : **05.05.82**

(54) **Azoverbindungen, Verfahren zu ihrer Herstellung und ihre Verwendung als Farbstoffe.**

(30) Priorität : **09.05.81 DE 3118402**

(43) Veröffentlichungstag der Anmeldung : **24.11.82 Patentblatt 82/47**

(45) Bekanntmachung des Hinweises auf die Patenterteilung : **20.02.85 Patentblatt 85/08**

(84) Benannte Vertragsstaaten : **CH DE FR GB IT LI**

(56) Entgegenhaltungen : **FR-A- 2 430 442**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Meininger, Fritz, Dr.**
**Loreleistrasse 7**
**D-6230 Frankfurt am Main 80 (DE)**
Erfinder : **Otten, Joachim, Dr.**
**Verstorben (DE)**

**EP 0 065 211 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung liegt auf dem technischen Gebiet der faserreaktiven Farbstoffe.

Aus der DE-PS 1 265 698 sind Azofarbstoffe bekannt, die einen faserreaktiven Monochlortriazinylrest und als weiteren faserreaktiven Rest eine β-Sulfatoethylsulfonyl-Gruppe enthalten. Diese Farbstoffe besitzen jedoch gewisse anwendungstechnische Mängel, so daß sie verschiedenen Anforderungen nicht vollauf genügen.

Es wurden nunmehr neue, wertvolle, wasserlösliche Azoverbindungen entsprechend der allgemeinen Formel (1)

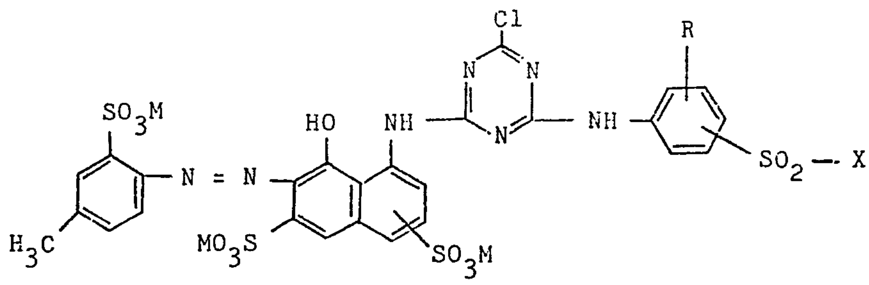 (1)

gefunden, in welcher

M für ein Wasserstoffatom oder das Äquivalent eines Metalls, wie insbesondere eines Alkali- oder Erdalkalimetalls, wie beispielsweise des Natriums, Kaliums, Lithiums und Calciums, steht,

R ein Wasserstoffatom, die Methyl-, Ethyl-, Methoxy-, Ethoxy- oder Carboxygruppe oder ein Halogenatom, wie ein Brom- und insbesondere Chloratom, ist,

X eine β-Sulfatoethyl-Gruppe (entsprechend der Formel $-CH_2-CH_2-OSO_3M$ mit M der obengenannten Bedeutung) oder eine β-Thiosulfatoethyl-Gruppe (entsprechend der Formel $-CH_2-CH_2-S-SO_3M$ mit M der obengenannten Bedeutung) oder die β-Chlorethyl-Gruppe oder insbesondere die Vinylgruppe bedeutet und

die Gruppe der Formel $-SO_2-X$ im Benzolkern in meta- oder para-Stellung zur Aminogruppe steht sowie

die zweite Gruppe der Formel $-SO_3M$ im Naphthalinkern in meta- oder para-Stellung zur Aminogruppe gebunden ist.

Die neuen Azoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialen, insbesondere Fasermaterialien.

Die vorliegende Erfindung betrifft weiterhin Verfahren zur Herstellung der obengenannten und definierten Azoverbindungen der allgemeinen Formel (1). Sie lassen sich beispielsweise erfindungsgemäß herstellen, indem man eine Verbindung der allgemeinen Formel (2)

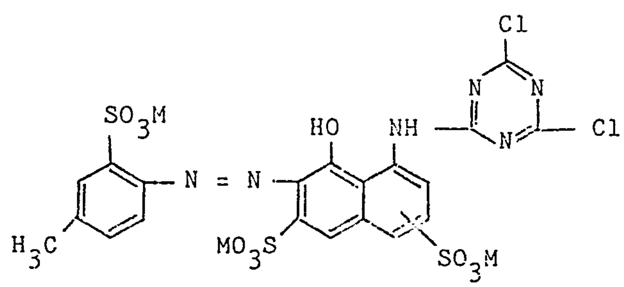 (2)

in welcher M die obengenannte Bedeutung besitzt und die zweite Gruppe der Formel $-SO_3M$ im Naphthalinkern in meta- oder para-Stellung zur Aminogruppe steht, mit einem aromatischen Amin der allgemeinen Formel (3)

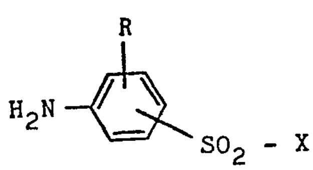 (3)

in welcher R und X die obengenannten Bedeutungen haben und die Gruppe der Formel $-SO_2-X$ im Benzolkern in meta- oder para-Stellung zur Aminogruppe gebunden ist, umsetzt oder daß man eine Azoverbindung der allgemeinen Formel (4)

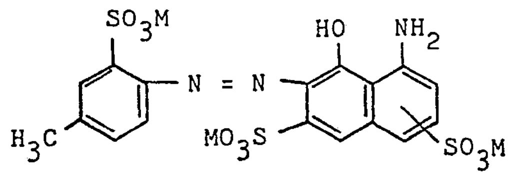

(4)

in welcher M die obengenannte Bedeutung besitzt und die zweite Gruppe der Formel $-SO_3M$ im Naphthalinkern in meta- oder para-Stellung zur Aminogruppe gebunden ist, mit einer Dichlortriazinylverbindung der algemeinen Formel (5)

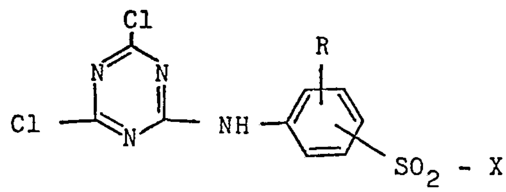

(5)

in welcher R und X die obigen Bedeutungen besitzen und die Gruppe der Formel $-SO_2-X$ im Benzolkern in meta- oder para-Stellung zur Aminogruppe gebunden ist, umsetzt.

Die Dichlortriazinylaminoverbindung der allgemeinen Formel (2) läßt sich analog bekannter Verfahrensweise durch Kupplung des Diazoniumsalzes von 4-Methyl-anilin-2-sulfonsäure mit 1-(2',4'-Dichlor-1'-3'-5'-triazin-6'-yl)-amino-8-hydroxy-naphthalin-3,6- oder -4,6-disulfonsäure herstellen. Ebenfalls kann die Umsetzung der Dichlortriazinylverbindungen der allgemeinen Formeln (2) und (5) mit den entsprechenden Aminoverbindungen analog bekannter Verfahrensweise erfolgen. Diese Reaktionen sind beispielsweise in W.F. Beech, Fibre-reactive Dyes, London 1970, Seiten 148 ff., beschrieben. Die oben erwähnte Kupplungsreaktion erfolgt bevorzugt in einem pH-Bereich zwischen 4 und 7 bei einer Temperatur zwischen 0 °C und 30 °C. Die Kondensationsreaktionen der Dichlortriazinylverbindungen mit den Aminoverbindungen werden in der Regel im wäßrigen Medium, gegebenenfalls unter Mitverwendung eines organischen Lösemittels, bei einer Temperatur zwischen 0 °C und 70 °C, vorzugsweise zwischen 20 °C und 70 °C, und bei einem pH-Wert von vorzugweise zwischen 4 und 7, durchgeführt.

Das erfindungsgemäße Verfahren kann somit in der Weise ausgeführt werden, daß man das Diazoniumsalz der 4-Methyl-anilin-2-sulfonsäure und die Anilinverbindung der allgemeinen Formel (3) in beliebiger Folge mit der 1-(2',4'-Dichlor-1',3',5'-triazin-6'-yl)-amino-8-naphthol-3,6- oder -4,6-disulfonsäure umsetzt.

Die bei den Kondensationsreaktionen freiwerdende Chlorwasserstoffsäure wird mittels säurebindender Mittel, wie beispielsweise Natrium- oder Kaliumhydroxid, Natrium- oder Kaliumcarbonat, Natrium- oder Kaliumbicarbonat, Natrium-acetat oder einem basischen Natriumphosphat gebunden.

Die Abscheidung der erfindungsgemäß hergestellten Verbindungen der allgemeinen Formel (1) aus der Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialen verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramifasern ; regenerierte Cellulosefasern sind beispielsweise Zellwolle und Viskosekunstseide.

Carbonamidgruppenhaltige Materialien sind beispielsweise synthetische und natürliche Polyamide

und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der allgemeinen Formel (1) lassen sich auf den genannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 60 und 105 °C, gegebenenfalls bei Temperaturen bis zu 120 °C unter Druck und gegebenenfalls in Gegenwart von üblichen Färbereihilfsmitteln. Man kann dabei so vergehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder einem anderen säurebindenden Mittel in der Druckpaste und durch anschließendes Dämpfen bei 100 bis 103 °C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen dieses behandelten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden ; sie zeichnen sich auf diesen Fasermaterialien bei Anwendung in den Färbe- und Druckverfahren durch eine hohe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 °C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit den erfindungsgemäßen Verbindungen der allgemeinen Formel (1) hergestellten Färbungen und Drucke zeichnen sich durch sehr klare Nuancen aus. Insbesondere besitzen die Färbungen und Drucke auf Cellulosefasermaterialien eine gute Lichtechtheit und sehr gute Naßechtheiten, wie Wasch-, Walk-, Wasser-, Seewasser-, Überfärbe- und Schweißechtheiten, desweiteren eine gute Plissierechtheit, Bügelechtheit und Reibechtheit. Insbesondere können die alkalische Schweißechtheit und Waschechtheit hervorgehoben werden.

Von besonderer Bedeutung ist die erfindungsgemäße Verwendung der Verbindungen der allgemeinen Formel (1) auch für das faserreaktive Färben von Wolle. Insbesondere läßt sich auch filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298) ; J. Soc. Dyers and Colourists *1972,* 93-99, und *1975,* 33-44) mit sehr guten Echtheitseigenschaften färben.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit einem pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100 °C durchgeführt, jedoch können sie auch in geschlossenen Färbeapparaturen bei Temperaturen bis zu 106 °C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist sehr hoch. Sie liefern auf den Fasermaterialien, insbesondere beim reaktiven Färben von Wolle, sehr klare, blaustichig rote Färbungen. Bei Anwendung von Färbetemperaturen von 100 bis 106 °C ist eine hohe Baderschöpfung festzustellen.

Bei den mit den erfindungsgemäßen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionell ähnlichen, bekannten Farbstoffen zeigen sie in überraschender Weise einen sehr guten Farbaufbau, wobei die brillante Nuance auch in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit den erfindungsgemäßen Verbindungen egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemäßen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Naßechtheitsniveau zu erzielen, wobei jedoch gegebenenfalls eine ammoniakalische Nachbehandlung bevorzugt werden kann. Neben der hohen Lichtechtheit dieser Wollfärbungen sind als sehr gute Naßechtheitseigenschaften insbesondere die ausgezeichnete alkalische Schweißechtheit und sehr gute Waschechtheit bei 60 °C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

## Beispiel 1

a) Unter Rühren werden 319 Teile 1-Amino-8-naphthol-3,6-disulfonsäure als trockne, gemahlene Ware in eine Suspension aus 190 Teilen Cyanurchlorid, 2 000 Teilen Wasser und 400 Teilen Eis eingetragen. Das Reaktionsgemisch wird noch 3 Stunden weitergerührt, wobei die Temperatur zwischen 12 und 16 °C und der pH-Wert durch Einstreuen von etwa 160 Teilen Natriumbicarbonat zwischen 1,8 und 2,3 gehalten wird. Nach dieser Zeit ist die Umsetzung beendet und kein freies Amin mehr nachweisbar.

b) Getrennt hiervon wird das Diazoniumsalz der Diazokomponente hergestellt :

187 Teile 4-Methyl-anilin-2-sulfonsäure werden in 1 800 Teile Eiswasser suspendiert ; 160 Volumenteile konzentrierte wäßrige Salzsäure werden hinzugegeben, und die Diazotierung erfolgt anschließend durch Einrühren von 205 Volumenteilen einer wäßrigen, 5n-Natriumnitritlösung bei einer Temperatur zwischen 0 °C und 5 °C. Es wird noch 30 Minuten nachgerührt und überschüssige salpetrige Säure sodann mit wenig Amidosulfonsäure zerstört.

c) Die unter b) hergestellte Diazoniumsalzlösung/suspension wird zu dem unter a) hergestellten Ansatz, der Dichlortriazinylverbindung, gegeben. Durch Einstreuen von Natriumbicarbonat wird ein pH-Wert von 4 bis 4,5 eingestellt. In diesem pH-Bereich und bei einer Temperatur zwischen 13 und 17 °C wird das Reaktionsgemisch noch 2 Stunden nachgerührt.

d) Getrennt hiervon wird eine Suspension von 4-Vinylsulfonylanilin für die zweite Kondensationsreaktion hergestellt :

300 Teile 4-β-Sulfatoethylsulfonyl-anilin werden in 2 000 Teilen Wasser unter Zusatz von 105 Teilen Natrium-bicarbonat neutral gelöst. Innerhalb von 30 Minuten werden bei 20 °C 30 Volumenteile einer

wäßrigen, 33 %igen Natronlauge langsam zugegeben. Der Ansatz wird noch 30 Minuten bei 20 °C nachgerührt.

e) Die unter d) hergestellte Suspension des 4-Vinylsulfonylanilins wird in die unter c) hergestellte Lösung der Dichlortriazinylaminonaphthol-azobenzol-Verbindung eingerührt. Zur Durchführung der Kondensationsreaktion wird dieses Reaktionsgemisch 1 Stunde bei einem pH-Wert zwischen 5,0 und 5,5 und bei einer Temperatur zwischen 25 und 30 °C gerührt ; danach wird die Reaktionstemperatur innerhalb von 2 Stunden langsam auf 50 °C erhöht, wobei der pH durch Einstreuen von Natriumbicarbonat auf einen Wert 6,0 bis 6,5 gehalten wird. Anschließend läßt man langsam unter Rühren auf Raumtemperatur abkühlen, wobei im Temperaturbereich zwischen 35 und 40 °C 400 Teile Natriumchlorid hinzugefügt werden. Die ausgefallene Verbindung wird abgesaugt, dreimal mit je 700 Volumenteilen einer wäßrigen, 15 %igen Natriumchloridlösung gewaschen und sodann mit 60 Teilen Dinatriumphosphat gut vermischt. Die feuchte Masse wird unter reduziertem Druck bei 60 °C im Trockenschrank getrocknet und anschließend gemahlen. Es werden etwa 1 080 Teile eines elektrolythaltigen (vorwiegend Natriumchlorid) roten Pulvers erhalten, das das Natriumsalz der Verbindung der Formel

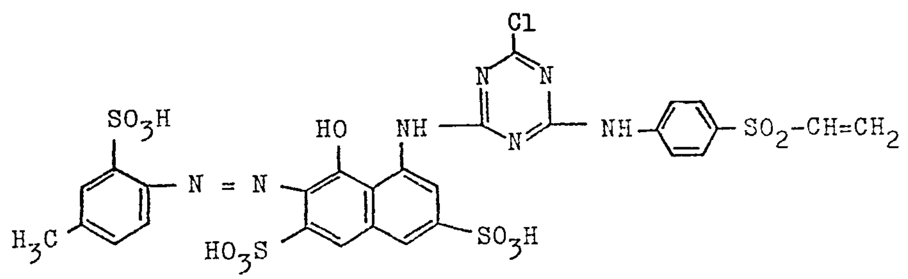

enthält. Diese zeigt sehr gute Farbstoffeigenschaften und liefert nach den in der Technik üblichen Anwendungs- und Fixiermethoden für faserreaktive Farbstoffe beispielsweise auf Wolle, einschließlich filzarm ausgerüsteter Wolle, klare, blaustichig rote Färbungen und Drucke mit sehr guten Naßechtheitseigenschaften, von denen vor allem die sehr gute Waschechtheit bei 60 °C hervorgehoben werden kann. Die Färbungen zeichnen sich weiterhin durch hohe Farbtiefen aus.

Beispiel 2

Man verfährt zur Herstellung einer erfindungsgemäßen Verbindung wie im Beispiel 1 beschrieben, verwendet jedoch in der zweiten Kondensationsstufe gemäß Abschnitt e) anstelle von 4-Vinylsulfonylanilin die gleiche Menge an 3-Vinylsulfonylanilin, das gemäß den Angaben von Beispiel 1d) durch alkalische Behandlung von 300 Teilen 3-β-Sulfatoethylsulfonylanilin hergestellt wurde.

Es wird entsprechend das Natriumsalz der Verbindung der Formel

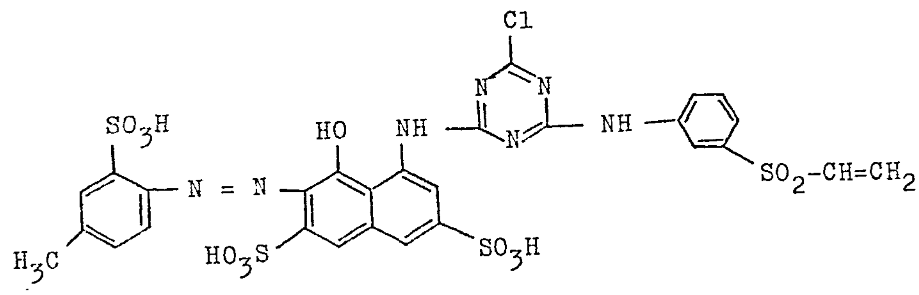

erhalten. Die erfindungsgemäße Verbindung zeigt sehr gute faserreaktive Farbstoffeigenschaften und färbt nach üblichen und bekannten Methoden beispielsweise Wolle, einschließlich filzarm ausgerüsteter Wolle, in kräftigen, brillanten blaustichig roten Farbtönen mit guten Naßechtheiten.

Beispiel 3

Unter Rühren werden 319 Teile 1-Amino-8-naphthol-4,6-disulfonsäure als trockene, gemahlene Ware in eine Suspension aus 190 Teilen Cyanurchlorid und 2 500 Teilen Eiswasser eingetragen. Das Reaktionsgemisch wird noch 3 Stunden weitergerührt, wobei die Temperatur zwischen 0 °C und 5 °C und der pH des Reaktionsgemisches durch Einstreuen von Natriumbicarbonat bei einem pH zwischen 1,7 und 2,0 gehalten wird. Nach dieser Zeit ist die Umsetzung in der ersten Kondensationsstufe beendet und kein freies. Amin mehr nachweisbar.

Dieser Ansatz mit der hergestellten Dichlortriazinyl-amino-naphthol-Verbindung wird gemäß der im Beispiel 1b)-e) beschriebenen Verfahrensweise zur erfindungsgemäßen Verbindung der Formel

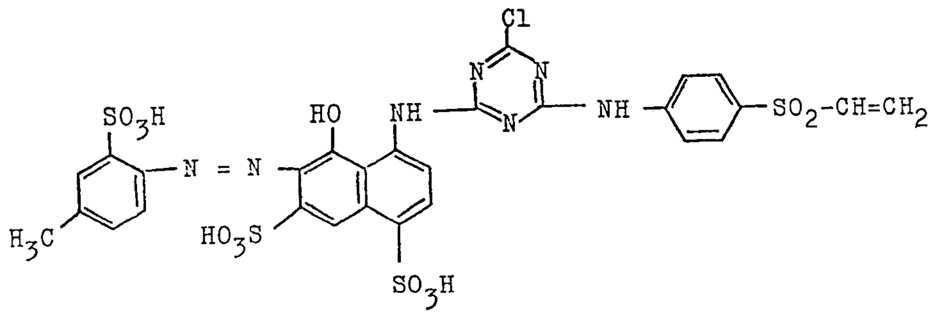

umgesetzt, das in Form des Natriumsalzes isoliert wird. Diese Verbindung zeigt ebenfalls sehr gute faserreaktive Eigenschaften und liefert beispielsweise auf Baumwolle und auf Wolle, einschließlich filzarm ausgerüsteter Wolle, kräftige, klare rote Färbungen mit sehr guten Naßechtheiten.

Beispiel 4

Man verfährt zur Herstellung einer erfindungsgemäßen Verbindung wie im Beispiel 1 beschrieben, verwendet jedoch in der zweiten Kondensationsstufe gemäß Abschnitt e) anstelle der Suspension von 4-Vinylsulfonyl-anilin die neutrale wäßrige Lösung des Natriumsalzes von 300 Teilen 4-β-Thiosulfatoethylsulfonyl-anilin in etwa 1 600 Teilen Wasser. — Die Ausfällung der hergestellten erfindungsgemäßen Azoverbindung aus der Syntheselösung erfolgt durch Zugabe von 300 Teilen Kaliumchlorid und 400 Teilen Natriumchlorid. — Es werden etwa 1 100 Teile eines elektrolythaltigen, roten Pulvers erhalten, das das Kalium- und Natriumsalz der Verbindung der Formel

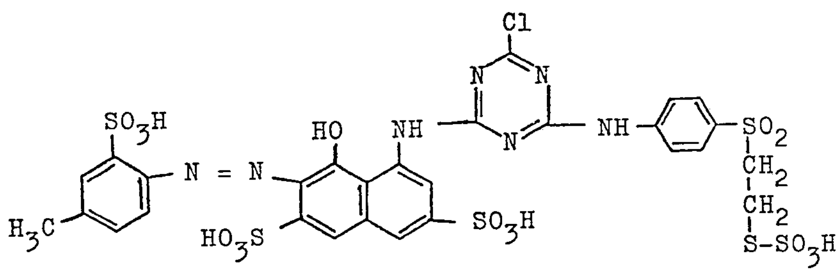

enthält. Diese erfindungsgemäße Verbindung zeigt sehr gute faserreaktive Farbstoffeigenschaften und färbt nach üblichen und bekannten Methoden beispielsweise Baumwolle, Zellwolle und Wolle in klaren, blaustichig roten Farbtönen mit sehr guten Naßechtheiten.

Beispiele 5 bis 11

Man verfährt analog einer der in den obigen Ausführungsbeispielen beschriebenen Verfahrensweisen, wobei in der zweiten Kondensationsstufe die äquivalente Menge der in dem jeweiligen Tabellenbeispiel angegebenen Anilinverbindung entsprechend der allgemeinen Formel (3) eingesetzt sowie eine entsprechende Aminonaphthol-Komponente verwendet wird, die in dem jeweiligen Tabellenbeispiel durch die Stellung der einen Sulfogruppe im Naphthalinkern zur acylierten Aminogruppe charakterisiert wird. Diese durch die Beispiele 5 bis 11 charakterisierten erfindungsgemäßen Verbindungen färben beispielsweise Wolle und Baumwolle nach den in der Technik üblichen Applikations- und Fixiermethoden für faserreaktive Farbstoffe in den angegebenen Tönen mit sehr guten Naßechtheiten.

| Bsp. | Amin der Formel (3) | Stellung der Sulfogruppe | Farbton |
|---|---|---|---|
| 5 | 4-β-Sulfatoethylsulfonyl-anilin | meta | blaustichig rot |
| 6 | 2-Methyl-4-β-sulfatoethylsulfonyl-anilin | meta | dito |
| 7 | 2-Methoxy-5-vinylsulfonylanilin | para | rot |
| 8 | 2-Brom-4-β-sulfatoethylsulfonyl-anilin | meta | blaustichig rot |
| 9 | 4-Methoxy-3-β-sulfatoethylsulfonyl-anilin | meta | dito |
| 10 | 4-Methoxy-3-vinylsulfonylanilin | meta | dito |
| 11 | 4-β-Sulfatoethylsulfonylanilin | para | rot |

Anwendungsbeispiel

100 Teile Wollgarn werden wie üblich vorgewaschen und in 3 000 Teile eines 40 °C warmen, wäßrigen Färbebades eingebracht, das 2 Teile Ammoniumacetat enthält und mittels Essigsäure auf einen pH-Wert von 5,5 eingestellt ist. Das Material wird 5 Minuten lang in diesem Bad behandelt. 3 Teile des in Beispiel 1 beschriebenen erfindungsgemäßen Farbstoffes werden, in wenig Wasser gelöst, hinzugegeben. Das Färbebad wird sodann innerhalb von 30 Minuten auf Siedetemperatur erhitzt und die Ware darin 45 Minuten lang bei dieser Temperatur behandelt. Das Garn wird herausgenommen, mit Wasser, sodann in einem wenig Essigsäure enthaltenden wäßrigen Bad, sodann wiederum mit Wasser gespült und getrocknet.

Es wird ein Wollmaterial mit klarer, blaustichiger Rotnuance und sehr guten Naßechtheiten erhalten.

**Ansprüche**

1. Verbindungen der allgemeinen Formel (1)

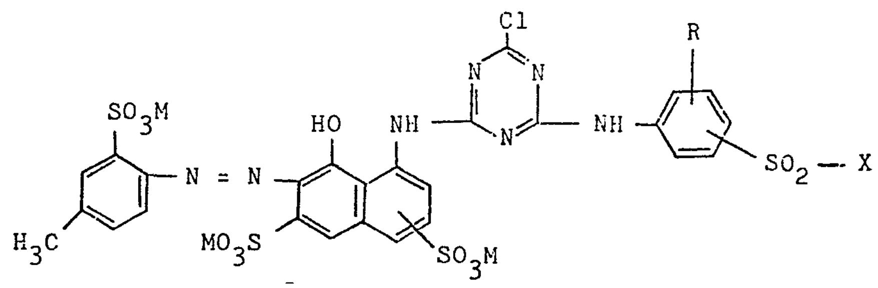

(1)

in welcher

M für ein Wasserstoffatom oder das Äquivalent eines Metalls steht,

R ein Wasserstoffatom, eine Methyl-, Ethyl-, Methoxy-, Ethoxy- oder Carboxygruppe oder ein Halogenatom ist,

X die Vinylgruppe, eine β-Sulfatoethyl-, eine β-Thiosulfatoethyl- oder die β-Chlorethyl-Gruppe bedeutet und

die Gruppe der Formel $—SO_2—X$ im Benzolkern in meta- oder para-Stellung zur Aminogruppe steht sowie

die zweite Gruppe der Formel $—SO_3M$ im Naphthalinkern in meta- oder para-Stellung zur Aminogruppe gebunden ist.

2. Verfahren zur Herstellung der in Anspruch 1 genannten und definierten Verbindungen der allgemeinen Formel (1), dadurch gekennzeichnet, daß man eine Verbindung der allgemeinen Formel (2)

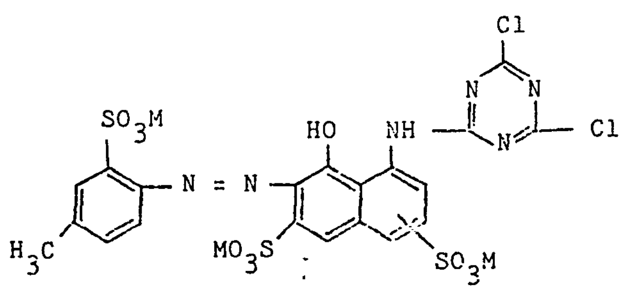

(2)

in welcher M die in Anspruch 1 genannte Bedeutung besitzt und die zweite Gruppe der Formel $—SO_3M$ im Naphthalinkern in meta- oder para-Stellung zur Aminogruppe steht, mit einer Aminoverbindung der allgemeinen Formel (3)

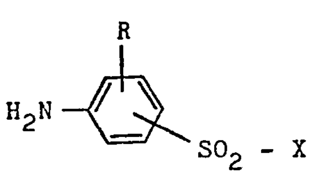

(3)

in welcher R und X die in Anspruch 1 genannten Bedeutungen haben und die Gruppe der Formel $—SO_2—X$ im Benzolkern in meta- oder para-Stellung zur Aminogruppe gebunden ist, umsetzt oder daß man eine Verbindung der allgemeinen Formel (4)

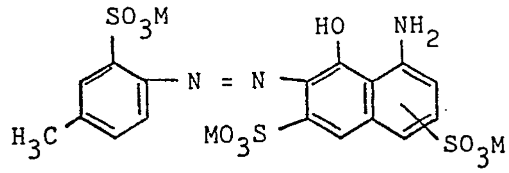
(4)

in welcher M die in Anspruch 1 genannte Bedeutung besitzt und die zweite Gruppe der Formel —$SO_3M$ im Naphthalinkern in meta- oder para-Stellung zur Aminogruppe gebunden ist, mit einer Dichlortriazinylverbindung der allgemeinen Formel (5)

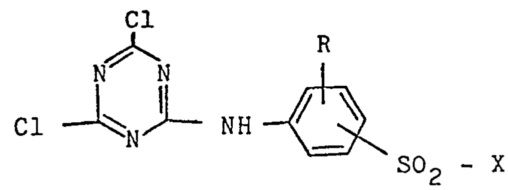
(5)

in welcher R und X die Anspruch 1 genannten Bedeutungen besitzen und die Gruppe der Formel —$SO_2$—X im Benzolkern in meta- oder para-Stellung zur Aminogruppe gebunden ist, umsetzt.

3. Verwendung der in Anspruch 1 genannten und definierten Verbindungen der allgemeinen Formel (1) zum Färben oder Bedrucken von hydroxy- und/oder carbonamidgruppenhaltigen Materialien, insbesondere Fasern.

4. Materialien aus hydroxy- und/oder carbonamidgruppenhaltigen Fasern, die mit einer Verbindung von Anspruch 1 gefärbt oder bedruckt wurden.

5. Verfahren zum Färben von hydroxy- und/oder carbonamidgruppenhaltigem Material, bei welchem man einen Farbstoff auf das Material aufbringt oder in das Material einbringt und ihn darauf oder gegebenenfalls darin, gegebenenfalls in der Wärme und/oder in Gegenwart eines säurebindenden Mittels, fixiert, dadurch gekennzeichnet, daß man als Farbstoff eine Verbindung der in Anspruch 1 genannten und definierten allgemeinen Formel (1) einsetzt.

**Claims**

1. Compounds of the general formula (1)

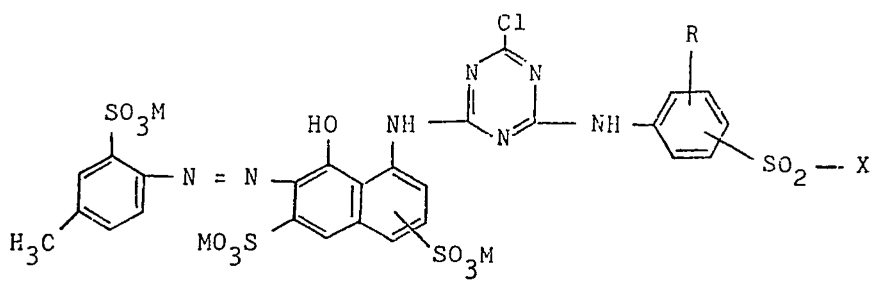
(1)

wherein

M represents a hydrogen atom or the equivalent of a metal,

R is a hydrogen atom, a methyl, ethyl, methoxy, ethoxy or carboxy group or a halogen atom,

X denotes the vinyl group, a β-sulfatoethyl, a β-thiosulfatoethyl or the β-chloroethyl group, and

the group of the formula —$SO_2$—X in the benzene nucleus is in the meta- or para-position relative to the amino group, and

the second group of the formula —$SO_3M$ in the naphthalene nucleus is in the meta- or para-position relative to the amino group.

2. A process for the manufacture of the compounds of the general formula (1) mentioned and defined in claim 1, characterized by that a compound of the general formula (2)

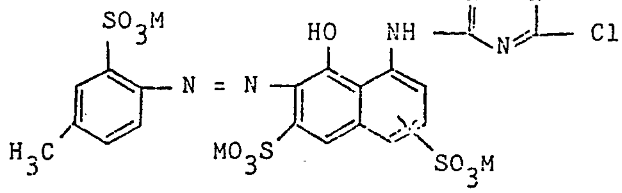
(2)

wherein M has the meaning mentioned in claim 1 and the second group of the formula —$SO_3M$ in the naphthalene nucleus is in the meta- or para-position relative to the amino group, is reacted with an amino compound of the general formula (3)

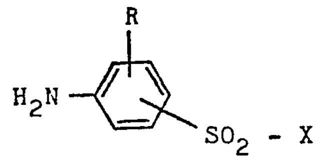

(3)

wherein R and X have the meanings mentioned in claim 1 and the group —$SO_2$—X in the benzene nucleus is in the meta- or para-position relative to the amino group, or that a compound of the general formula (4)

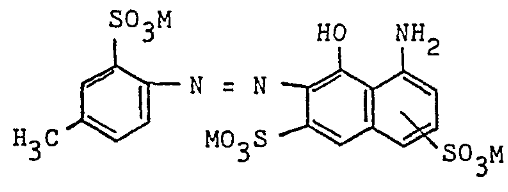

(4)

wherein M has the meaning mentioned in claim 1 and the second group of the formula —$SO_3M$ in the naphthalene nucleus is in the meta- or para-position relative to the amino group, is reacted with a dichlorotriazinyl compound of the general formula (5)

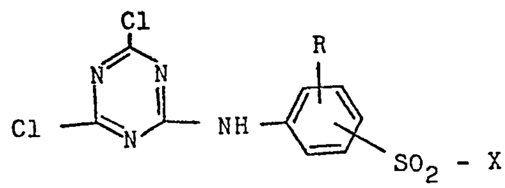

(5)

wherein R and X have the meanings mentioned in claim 1 and the group —$SO_2$—X in the benzene nucleus is in the meta- or para-position relative to the amino group.

3. Use of the compounds of general formula (1) specified and defined in claim 1, for dyeing or printing a material, in particular fibers, containing hydroxy and/or carbonamide groups.

4. Material made from fibres containing hydroxy and/or carbonamide groups, which has been dyed or printed with a compound of claim 1.

5. A process for coloring a material containing hydroxy and/or carbonamide groups, wherein a dyestuff is applied to the material or incorporated into the material and fixed on it or optionally in it, optionally with the action of heat and/or in the presence of an acid-binding agent, characterized by that a compound of the general formula (1) specified and defined in claim 1, in used as the dyestuff.

**Revendications**

1. Composés répondant à la formule générale (1)

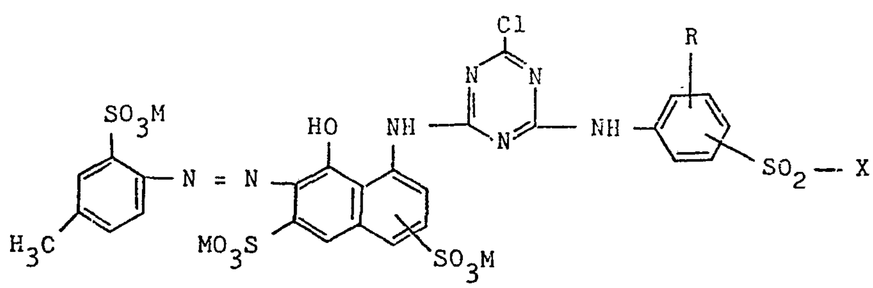

(1)

dans laquelle

M représente un atome d'hydrogène ou l'équivalent d'un métal,

R représente un atome d'hydrogène, un radical méthyle, éthyle, méthoxy, éthoxy ou carboxy ou un atome d'halogène, et

X représente un radical vinyle, β-sulfato éthyle, β-thiosulfato éthyle ou β-chloro éthyle, et dans laquelle

le radical —$SO_2$—X occupe, sur le noyau benzénique, une position méta ou la position para par rapport au radical amino, et

le second radical $—SO_3M$ occupe, sur le noyau naphtalénique, la position méta ou para par rapport au radical amino.

2. Procédé de préparation des composés de formule générale (1) qui ont été définis à la revendication 1, procédé caractérisé en ce qu'on fait réagir un composé répondant à la formule générale (2)

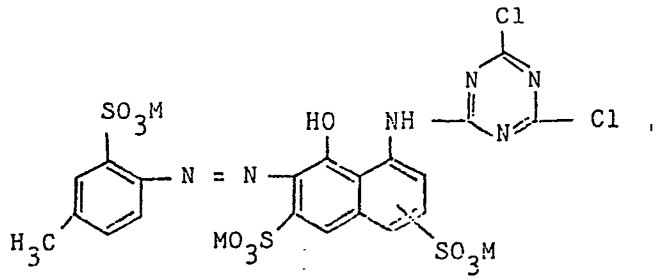

(2)

dans laquelle M a la signification donnée à la revendication 1 et le second radical $—SO_3M$ occupe, sur le noyau naphtalénique, la position méta ou para relativement au radical amino, avec un composé amino répondant à la formule générale (3)

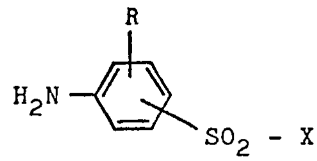

(3)

dans laquelle R et X ont les significations données à la revendication 1 et le radical $—SO_2—X$ occupe, sur le noyau benzénique, une position méta ou la position para relativement au radical amino, ou on fait réagir un composé répondant à la formule générale (4)

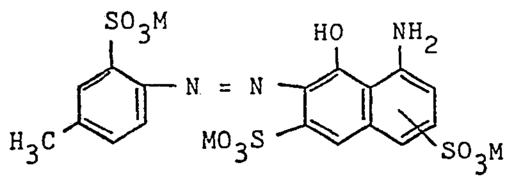

(4)

dans laquelle M a la signification donnée à la revendication 1 et le second radical $—SO_3M$ occupe, sur le noyau naphtalénique, la position méta ou la position para par rapport au radical amino, avec un composé dichlorotriazinylique répondant à la formule générale (5)

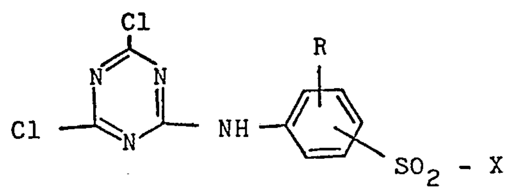

(5)

dans laquelle R et X ont les significations données à la revendication 1 et le radical $—SO_2—X$ occupe, sur le noyau benzénique, une position méta ou la position para relativement au radical amino.

3. Application des composés de formule générale (1) qui ont été définis à la revendication 1 à la teinture ou à l'impression de matières, en particulier de fibres, contenant des radicaux hydroxy et/ou des radicaux carbamoyles.

4. Matières constituées de fibres contenant des radicaux hydroxy et/ou des radicaux carbamoyles, qui ont été teintes ou imprimées à l'aide d'un composé selon la revendication 1.

5. Procédé de teinture de matières contenant des radicaux hydroxy et/ou des radicaux carbamoyles, selon lequel un colorant est appliqué sur la matière ou introduit dans celle-ci et est fixé sur celle-ci ou éventuellement dans celle-ci, le cas échéant à chaud et/ou en présence d'un accepteur d'acides, procédé caractérisé en ce qu'on utilise, comme colorant, un composé répondant à la formule générale (1) qui a été représentée et définie à la revendication 1.